# NEW EUROPEAN PATENT SPECIFICATION

(11) **EP 2 034 665 B2**
(45) Date of publication and mention of the opposition decision: **31.10.2012**
(45) Mention of the grant of the patent: 18.08.2010
(21) Application number: 07764123.1
(22) Date of filing: 26.06.2007
(51) Int. Cl.: H04L 12/24

(54) **DOMAIN MANAGER SYSTEM, METHOD AND DEVICE FOR ACQUIRING NEIGHBOR DOMAIN MANAGER AND UPDATING DOMAIN MANAGER**
DOMÄNENMANAGERSYSTEM, VERFAHREN UND VORRICHTUNG ZUR ERFASSUNG EINES NACHBARDOMÄNENMANAGERS UND AKTUALISIERUNG EINES DOMÄNENMANAGERS
SYSTÈME GESTIONNAIRE DE DOMAINES, PROCÉDÉ ET DISPOSITIFS D'ACQUISITION DU GESTIONNAIRE DE DOMAINES AVOISINANTS ET MISE À JOUR DU GESTIONNAIRE DE DOMAINES

(30) Priority: 26.06.2006 CN 200610061338
(43) Date of publication of application: 11.03.2009
(73) Proprietor: Huawei Technologies Co., Ltd., Longgang District, Shenzhen Guangdong 518129 (CN)
(72) Inventor: SHI, Guangyu, Shenzhen, Guangdong 518129 (CN)
(74) Representative: Körber, Martin Hans
(86) International application number: PCT/CN2007/070189
(87) International publication number: WO 2008/003258

(56) References cited:
- EP-A- 1 587 282
- WO-A1-2006/000467
- CN-A- 1 440 159
- US-A1- 2005 262 232
- US-B1- 6 430 613
- TERZIS A ET AL: "A two-tier resource management model for the internet" 19991205; 19991205 - 19991209, vol. 3, 5 December 1999 (1999-12-05), pages 1779-1791, XP010373729

## Description

### Field of the Invention

The present invention relates to a telecommunication network management, and in particular to a Domain Manager system, a method for discovering a Neighbor Domain Manager in the Domain Manager system, a method for updating the Domain Manager system and a registration query center.

### Background of the Invention

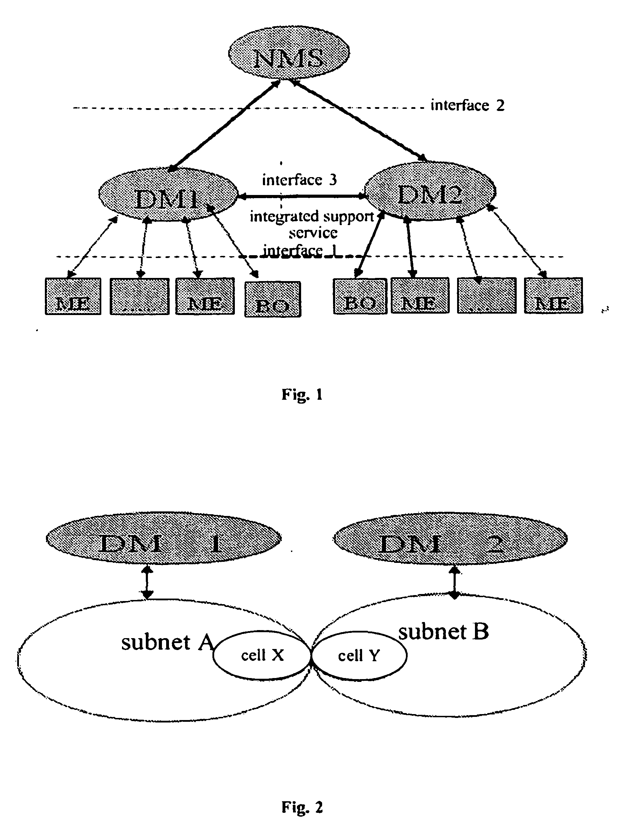

A management model of a Peer-to-Peer Domain Manager (P2P DM) in a communication network is shown in Figure 1, where a Network Management System (NMS) manages a subordinate Domain Manager (DM) and network level resources, and can manage directly a Managed Element (ME) in some applications. The NMS masters complete data of an entire network and can perform some scheduling and configuring functions of the entire network, such as a united resources adjustment by the NMS through controlling a plurality of subordinate DMs. A DM stores data of MEs under its management and operates these managed MEs, thus behaving as an Element Management System (EMS) of a traditional telecommunication management model. Moreover, compared with the traditional telecommunication management model, a DM has further advantages: an interface (interface 3) for information interaction, i.e. a Peer-to-Peer Interface (P2PI) is added between two DMs, with this interface DM1 can acquire current information of a Border Object (BO) managed by DM2; likewise, the DM2 can acquire current information of a BO managed by the DM1. Further, in the P2P DM model, an integrated support service is established for the P2PI as a function entity to provide a service for the cooperation between DMs, with the use of this mode, it is obviously possible for the DMs to perform directly an association operation. An ME may be a device, a connection between devices, physical resources or logical resources, etc. An ME at the border of a subnet to which it is subordinate, i.e. an ME at the border of a DM is referred to as a BO.

At present, a primary application field of adding a P2PI between DMs is wireless network management, because in either a GSM network or a WCDMA/CDMA network, there is a close correlation in term of data configurations of neighbor cells which results in that a change on configuration data of one cell often cause an impact on the operation of a neighbor cell. If two neighbor cells are managed by different DMs (as shown in Figure 2), with the use of the management model as shown in Figure 1, it is possible to perform an association operation of the neighbor cells described above at DM level, thereby eliminating inconsistency or errors which tend to be induced by a manual association operation.

In a large scale network, however, there may be multiple Domain Managers from multiple manufacturers. A key technology in the management model shown in Figure 1 lies in how to enable a Domain Manager to discover its Neighbor Domain Manager, such as how to enable the DM1 in Figure 2 to discover the DM2 as a Neighbor Domain Manager (NDM) and to discover a Neighbor Border Object (NBO) between the DM1 and DM2. It is apparent that if no such neighbor relationship is established, a change on configuration data of the cell X in the DM1 can be notified to the cell Y in the DM2 only through notifying the change to all the DMs by broadcasting. Further, it is inevitable to waste resources greatly if each configuration change message needs to be broadcast to all the DMs.

In a technical solution for discovering a Neighbor Domain Manager in the prior art, individual DMs such as DM A, by using an identifier (such as BOID1) of its managed BO, queries other DMs whether they manage a BO neighboring to the managed BO having the identifier of BOID1. If a DM such as DM B replies that it manages a BO neighboring to the managed BO having the identifier of BOID1, DM A discovers that DM B is a Neighbor Domain Manger of DM A. Since there may be not only two BOs exist in a neighbor relationship, in other words, there may be three or more neighbor BOs, to ensure integrality, a DM needs to query all other DMs for each BO under its management. There are a large number of BOs and DMs in a large scale network constituted of devices from multiple manufacturers, and therefore a very heavy communication load is induced in discovering a neighbor relationship through querying all the Domain Manager across the network, thus lots of resources are consumed.

EP1587282 A discloses a data overlay built as a data structure on a logical space defined by a distributed hash table in a peer-to-peer network. The data overlay is implemented on top of the DHT system. The data overlay includes a tree having tree nodes that each have a zone mapped to a corresponding DHT node in the logical space of the DHT. The data overlay can serve the role of data gathering and data broadcast.
US6430613 B1 discloses a process and a system for network management that are fully capable of being parameterized remotely via the protocol SNMP.

### Summary of the Invention

An embodiment of the present invention provides a Domain Manager system, a method for discovering a Neighbor Domain Manager in the Domain Manager system, and a registration query center, thereby a communication load induced in establishing a neighbor relationship is reduced effectively, and resources are saved. An embodiment of the present invention further provides a method for updating the Domain Manager system

An embodiment of the present invention provides a Domain Manager system including a plurality of Domain Managers which include a first Domain Manager. The Domain Manager system further includes a registration query center for storing neighbor relationship determining information of the plurality of Domain Managers, receiving a query request from the first Domain Manager, querying for a Neighbor Domain Manager from the neighbor relationship determining information based upon the query request, and sending a query result to the first Domain Manager, the first Domain Manager discovers a Domain Manager neighboring to it from the received query result.

An embodiment of the present invention further provides a method for discovering a Neighbor Domain Manager, including: receiving from a first Domain Manager a query request for a Domain Manager neighboring to the first Domain Manager, querying the stored neighbor relationship determining information of various Domain Managers based upon the query request, finding out a Domain Manager neighboring to the first Domain Manager and sending a query result to the first Domain Manager.

An embodiment of the present invention further provides a registration query center including a storage unit, a query unit and a transceiver unit. The transceiver unit is adapted to receive neighbor relationship determining information and a query request from a plurality of Domain Managers in a Domain Manager system, and send a query result to a corresponding Domain Manager. The storage unit is adapted to store the neighbor relationship determining information of the plurality of Domain Managers received by the transceiver unit. The query unit is adapted to query for, according to the query request received by the transceiver unit, a Neighbor Domain Manager from the neighbor relationship determining information provided by the storage unit, and notify the transceiver unit of the query result.

It can seen from an embodiment of the present invention that through storing the neighbor relationship determining information of various Domain Managers, a desired query result can be provided directly to a Domain Manager when the Domain Manager queries for a Neighbor Domain Manager, without querying all the Domain Managers across the network to obtain the desired query result. Therefore, with the use of technical solutions provided in the embodiments of the present invention, a Domain Manager can discover a Neighbor Domain Manager with effectively reduced difficulty and communication load, thus decreasing resources consumption.

### Brief Descriptions of the Drawings

Figure 1 is a schematic diagram of a Peer-to-Peer Domain Management model in a communication network in the prior art;

Figure 2 is a schematic diagram illustrating neighbor cells managed by different DMs in a wireless network in the prior art;

Figure 3 is a schematic diagram of an implementation process according to a first embodiment of the present invention;

Figure 4 is a schematic diagram of an Distributed Hash Table Overlay in a second embodiment of the present invention;

Figure 5 is a schematic diagram of an implementation process under an unsymmetrical neighbor relationship according to a second embodiment of the present invention; and

Figure 6 is a structural schematic diagram of a registration center according to an embodiment of the present invention.

### Detailed Descriptions of the Embodiments

For the convenience of description, a BO X within a DM, such as DM A, is referred to as an Internal BO of DM A, while a BO Y subordinate to another DM, such as DM B, which is neighboring to the Internal BO X of DM A is referred to as an External BO (External BO) of the DM A. Apparently, an Internal BO X subordinate to the DM A is an External BO of the DM B, and in terms of Domain Managers that establish a neighbor relationship through an Internal BO, such as the DM A and DM B, the DM A is referred to as a neighbor Domain Manager of the DM B, and the DM B is referred to as a neighbor Domain Manager of the DMA.

In the present invention, the neighbor relationship determining information of each of the Domain Managers is stored via a registration query center. When one of the Domain Managers (referred to as a first Domain Manager hereinafter) sends a request to the registration query center, to query other Domain Manager to which an External BO neighboring to one Internal BO of the first Domain Manager is subordinate, the registration query center queries the neighbor relationship determining information. Upon finding a Domain Manager meets the query, the registration query center notifies the first Domain Manager of the found Domain Manager. Upon receiving the notification, the first Domain Manager may discover the Domain Manager neighboring to it.

Compared with an existing technical solution in which a first Domain Manager may discover a Neighbor Domain Manager only through querying all the other Domain Managers, a first Domain Manager according to an embodiment of the present invention may find a Neighbor Domain Manager simply via a registration query center; thereby resource consumption is decreased effectively doubtless.

The objects, technical solutions and advantages will be better understood through further description of a plurality of embodiments of the present invention in details with reference to the drawings. It shall be appreciated that the embodiments described herein is intended to describe the present invention only, and shall not be taken as limit to the present invention.

In a first embodiment of the present invention, a registration query center is a centralized server. In this way, information of a BO is stored on a centralized means which may be a part of integrated support service. The centralized means may be one or more computers physically, and store neighbor relationship determining information in a form of a database or other forms (such as directory service) with high query performance.

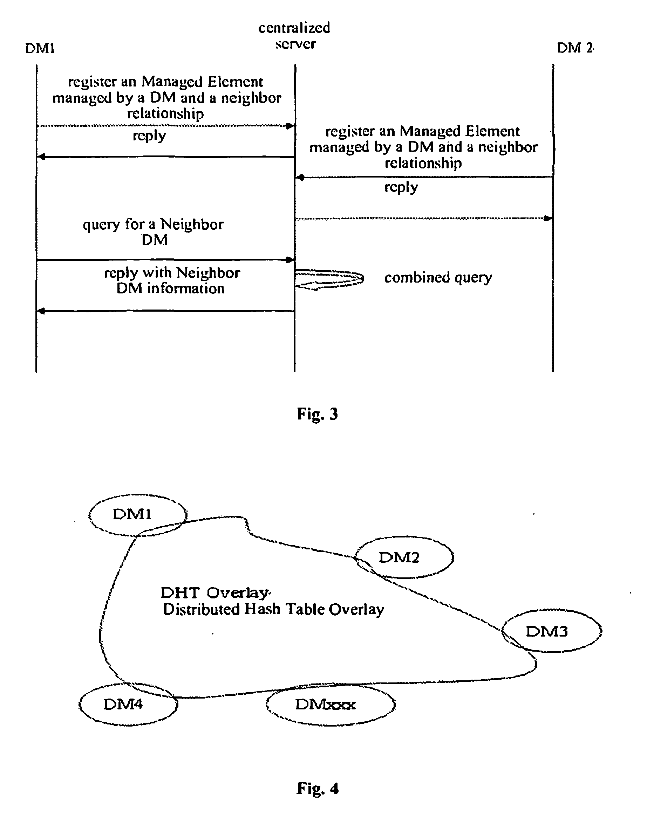

Figure 3 illustrates an implementation process of an embodiment as follows.

1. A plurality of Domain Managers, including DM1 and DM2, send the neighbor relationship determining information to a centralized server (only DM1 and DM2 are shown in Figure 3).

There are two cases in sending the neighbor relationship determining information to a centralized server by a Domain Manager. In a first case, a neighbor relationship between BOs is symmetrical, in other words, if a BO A subordinate to the DM1 is neighboring to a BO B subordinate to the DM2, the BO B is also neighboring to the BO A. Here, the neighbor relationship determining information sent by a Domain Manager needs not includes match relationships between the Domain Manager and all of its managed MEs (including an Internal BO), instead, only the Domain Manager and the match relationship between an Internal BO and an External BO, i.e. the match relationship between the Domain Manager and its managed Internal BO as well as the match relationship between the Internal BO and the corresponding External BO, need to be included. In other words, the neighbor relationship determining information needs include simply the match relationship among Domain Manager, the Internal BO managed by the Domain Manager, and the External BO neighboring to the Internal BO.

In particular, the neighbor relationship determining information of the DM1 includes an identifier of the DM1 (referred directly to as DM1 in this embodiment), an identifier of an Internal BO of the DM1 and an identifier of an External BO of the DM1 that is neighboring to the Internal BO of the DM 1. For the convenience of description, assumes that the DM 1 has two BOs (Internal BOs) which are BO 0001 and BO 0002 respectively. Here, the External BOs neighboring to BO 0001 include an External BO 0009 and an External BO 0010, while the External BO neighboring to BO 0002 includes an External BO 0006. Likewise, the neighbor relationship determining information of the DM2 includes simply the DM2 and an identifier of the Internal BO of the DM2, as well as an identifier of the External BO of the DM2 that is neighboring to the Internal BO of the DM2. For example, if BO 0009 is an Internal BO of the DM2, the External BO neighboring to the BO 0009 is the External BO 0001.

2. A centralized server stores identifiers of various Domain Managers, an Internal BO and the corresponding External BO, and sends a reply signal to the various Domain Managers (including DM1 and DM2) to acknowledge successful storage of the neighbor relationship determining information of the various Domain Managers.

When a storage is performed by the centralized server taking a form of a database as an example, the neighbor relationship determining information is recorded on the centralized server in a form as shown in the Table 1 below, where a Domain Manager takes its name as its identifier.

**Table 1: NBORelation 1**

| DMID | BOID | ExternalBOID |
|---|---|---|
| DM1 | 0001 | 0009 |
| DM1 | 0001 | 0010 |
| DM1 | 0002 | 0006 |
| DM2 | 0009 | 0001 |
| DM3 | 0006 | 0007 |
| DM4 | 0010 | 0001 |
| ... | ... | ... |

3. The DM1 sends a query request to the centralized server, to query for a Domain Manager to which an External BO neighboring to an Internal BO (e.g. BO 0001) managed by the DM1 is subordinate, with the query including the DM1 and BO 0001.

4. The centralized server queries the neighbor relationship determining information registered by the various Domain Managers, in other words, to query the Table 1. The centralized server first find the DM1 in a column of DMID of the Table 1 according to the match relationship among the Domain Manager, the Internal BO and the External BO; then find the Internal BO 0001 managed by the DM1 in a column of BOID. Here, the centralized server further finds that there exist in the column of ExtranalBOID two neighboring External BOs which are ExternalBO 0009 and ExternalBO 0010 respectively, and then searches in the column of BOID with the ExternalBO 0009 and ExternalBO 0010 used respectively as Internal BOs BO 0009 and BO 0010, thereby discovering that the ExternalBO 0009 is subordinate to the Domain Manager of DM2 and the ExternalBO 0010 is subordinate to the Domain Manager of DM4. The query syntax is as follows.
SELECT DMID FROM NBORelation1 WHERE BOID IN
(SELECT ExternalBOID FROM NBORelation1 WHERE DMID = 'DM1'AND BOID = '0001')

Next, the centralized server sends a query result to the DM1, to notify the DM1 that the Domain Managers queried for are DM2 and DM4 respectively. The centralized server may further notify the DM1 that the Internal BO BO 0009 of the DM2 is neighboring to the Internal BO BO 0001 of the DM1, and the Internal BO BO 0010 of the DM4 is also neighboring to the Internal BO BO 0001 of the DM1.

Upon receiving the notification send by the centralized server, the DM1 may discover that the DM2 and DM4 are neighboring to it, and if desired, further discover that both the BO 0009 and BO 0010 are neighboring to the BO 0001.

A query request may be sent to the centralized server with only the DM1 included in the query request, that is, to query for all the DMs neighboring to the DM1. Here, upon querying the Table 1, the centralized server searches with respect to various Internal BOs managed by the DM1, such as the BO 0001 and BO 0002. As described above, the Internal BO BO 0009 of the DM2 and the Internal BO BO 0010 of the DM4 are discovered as being respectively neighboring to the BO 0001, also the Internal BO BO 0006 of the DM3 may be discovered as being neighboring to the BO 0002. Moreover, it is possible to directly find all the External BOs ExternalBO 0009, 0010 and 0006 corresponding to the DM1 according to the match relationship among the Domain Manager, the Internal BO and the External BO, and then search in the column of BOID with all these External BOs used as Internal BOs BO 0009, BO 0010 and BO 0006 respectively, thereby finding that the respective Domain Managers are DM2, DM4 and DM3 respectively. The query syntax is as follows.
SELECT DMID FROM NBORelation1 WHERE BOID IN
(SELECT ExternalBOID FROM NBORelation1 WHERE DMID ='DM1')

In addition, the centralized server may send a query result to the DM1 with only the DM2, DM4 and DM3 included within the query result, so that the DM1 can be only aware that it is neighboring to the DM2, DM4 and DM3, but not aware of particular neighboring Internal BOs. Further, the query result may also includes the Internal BO BO 0009 of the DM2, the Internal BO BO 0010 of the DM4 and the Internal BO BO 0006 of the DM3, so that the DM1 can be aware that both BO 0009 and BO 0010 are neighboring to the BO 0001, and the BO 0002 is neighboring to the BO 0006.

The case where a neighbor relationship between BOs is symmetrical has been described above. Hereinafter, a process flow in a second case where a neighbor relationship between BOs is unsymmetrical will be described. For example, a switching relationship between GSM cells is unsymmetrical due to having only a unidirectional record. Upon switching from a border cell of the DM1 to a border cell of the DM2, for example, the DM1 is aware of a border cell subordinate to the DM2 that may act as a switching object of border cell of DM1, however, the DM2 is not aware that a border cell of the DM1 would switch to a border cell managed by DM2. A DM establishes a global unique identifier for a managed object (e.g. a cell), this has been implemented in an existing network management system, the identifier may be a Common Gateway Interface (CGI) with respect to a GSM network, and it is similar for a WCDMA network and the like. For the convenience of description, a BO (a border cell herein) is still indicated with four digits. If a neighbor relationship between BOs is symmetrical, there are also two cases, with the above description under a unsymmetrical neighbor relationship between the DM1 and DM2 taken as an example, in a first case, the DM2 is aware of which of its managed cells are border cells, and in a second case, the DM2 is not aware of which of its managed cells are border cells. These two cases will be described in details below.

Firstly, the first case under the condition of unsymmetrical neighbor relationship between Border Objects will be described, where the DM2 is aware of which of its managed cells are border cells.

1. In the case that various DMs of GSM send neighbor relationship determining information to a centralized server, taking the DM1 and DM2 as an example, when a border cell of the DM1 is to be switched to a border cell of the DM2, the neighbor relationship determining information of the DM1 contains the DM1, an identifier of an internal border cell of the DM1, and an identifier of a corresponding external border cell, such as DM1, BO 0001 and ExternalBO 0009, and DM1, BO 0001 and ExternalBO 0010; while the neighbor relationship determining information of the DM2 contains only the DM2 and an identifier of an internal border cell of DM2, such as DM2 and BO 0009.

In practice, a border cell of the DM 1 can also be switched to a border cell of another DM such as DM4 (not shown in Figure 2); similarly, a border cell of another DM such as DM5 can be switched to a border cell of the DM1. In other words, a border cell of each DM can not only switch to a border cell of another DM, but also act as a target to which a border cell of another DM switches.

In view of the above description, each DM should contains within its sent neighbor relationship determining information two parts of information respectively with respect to switching to another DM and acting as a target to which another DM switches. For example, the sent neighbor relationship determining information of the DM1 contains DM1, BO 0001, ExternalBO 0009; DM1, BO 0001, ExternalBO 0010; and DM1, BO 0001.

2. The centralized server stores the neighbor relationship determining information in a form as shown in Table 2, with a Domain Manager taking its name as its identifier.

**Table 2: NBORelation 2**

| DMID | BOID | ExternalBOID |
|---|---|---|
| DM1 | 0001 | 0009 |
| DM1 | 0001 | 0010 |
| DM1 | 0001 | |
| DM2 | 0009 | |
| DM2 | 0007 | 0008 |
| DM3 | 0006 | 0007 |
| DM4 | 0010 | |
| DM5 | 0011 | 0001 |
| ... | ... | ... |

The second row and the third row in Table 2 indicate that a border cell of the DM1 is to be switched to a border cell of another DM, and the fourth row indicates that a border cell of another DM is to be switched to a border cell of the DM1. In other words, the neighbor relationship determining information stored in the table contains the neighbor relationship of a border cell known to each Domain Manager and a border cell managed by each Domain Manager.

3. The DM1 sends a request to the centralized server to query for a Domain Manager to which an External BO neighboring to one Internal BO (such as the BO 0001) managed by the DM1 is subordinate. The request may include either the DM1 and BO 001, or the DM1 only. Here, the description is conducted by taking an example that the DM1 and BO 0001 are included.

4. The centralized server queries Table 2 with the same process flow as that of querying Table 1. The query syntax is as follows.
SELECT DMID FROM NBORelation2 WHERE BOID IN
(SELECT ExternalBOID FROM NBORelation2 WHERE DMID = 'DM1' and BOID = '0001')

Next, the centralized server sends a query result to the DM1, to notify the DM1 that the Domain Managers queried for are DM2 and DM4 respectively. The centralized server may further notify the DM1 that the cell 0001 of the DM1 is neighboring to the cell 0009 of the DM2, and the cell 0001 of the DM1 is neighboring to the cell 0010 of the DM4. Upon receiving the notification, the DM1 may discover that the DM2 and DM4 are neighboring to the DM1, and further discover that its cell 0001 is neighboring to the cell 0009 of the DM2 and the cell 0010 of the DM4 respectively.

Secondly, the second case under the condition of unsymmetrical neighbor relationship between Border Objects will be described, where the DM2 is not aware of which of its managed cells are border cells.

In particular, under the condition of unsymmetrical neighbor relationship between BOs, when a border cell of the DM1 is to be switched to a border cell of the DM2, the DM2 cannot determine which of its managed cells is a border cell. Therefore, in this case, as a Domain Manager, to which the cell having been switched to, is subordinate, the DM2 includes within its neighbor relationship determining information the DM2 and identifiers of all the MEs (all the cells managed by the DM2 herein) managed by the DM2, such as DM2 and O 0009, and DM2 and O 0007. As a Domain Manager to which the cell having been switched is subordinate, the DM1 includes within its neighbor relationship determining information the DM1, BO 0001 and ExternalBO 0009.

Likewise, the DM1 may act as the Domain Manager to which the cell having been switched to is subordinate, and the DM2 may act as the Domain Manager to which the cell having been switched is subordinate. Therefore, a DM should includes within its neighbor relationship determining information two parts of information respectively about switching to another DM and about acting as a target to which another DM switches. For example, the neighbor relationship determining information of the DM1 may include DM1, BO 0001, ExternalBO 0009; DM1, BO 0001, ExternalBO 0010; and DM1, O 0001; DM1 O 0005.

The centralized server stores the neighbor relationship determining information in a form as shown in Table 3 and 4. Neighbor relationship between border cells, with multiple DMs acting as the Domain Managers to which the cell having been switched is subordinate, is stored in Table 3, while information of all the cells managed by each of the multiple Domain Managers acting as the Domain Manager to which the cell having been switched to is subordinate is stored in Table 4. It can be seen from the comparison with Table 2, a Domain Manager to which the cell having been switched to is subordinate is not aware that which of its managed cells are border cells, therefore, information of all the cells managed by this Domain Manager needs to be stored in the centralized server.

**Table 3: NBORelation 3**

| DMID | BOID | ExternalBOID |
|---|---|---|
| DM1 | 0001 | 0009 |
| DM1 | 0001 | 0010 |
| DM2 | 0007 | 0008 |
| DM3 | 0006 | 0007 |
| ... | ... | ... |

**Table 4: DMMO**

| DMID | OID |
|---|---|
| DM2 | 0009 |
| DM2 | 0003 |
| DM4 | 0010 |
| DM1 | 0001 |
| DM1 | 0005 |
| ... | ... |

When the DM1 initiates a request of querying for a Neighbor Domain Manager, by taking an example that the request includes DM1 and BO 0001, the centralized server needs query jointly Table 3 and 4 upon receiving the request. In particular, Firstly, according to a match relationship among a Domain Manager, an Internal BO and an External BO, the centralized server finds from Table 3 an internal border cell BO 0001 managed by the DM1 and all external border cells neighboring to the internal border cell BO 0001, herein the external border cells are External BO 0009 and External BO 0010. Next, with these external border cells taken as Managed Elements (cells herein) O 0009 and O 0010, the centralized server finds a Domain Manager to which the cells having OID (Managed Element Identifier, and being a cell identifier hcrcin) equal to 0009 and 0010 are subordinate from Table 4 according to a match relationship between the Domain Manager and the Managed Elements. Then it is discovered that the cell O 0010 of the DM4 is neighboring to the internal border cell BO 0001 of the DM1, and the cell O 0009 of the DM2 is neighboring to the internal border cell BO 0001 of the DM1, the SQL query syntax is as follows:
SELECT DMMO.DMID FROM DMMO, NBORelation3 WHERE NBORelation3.DMID = 'DM1' AND NBORelation3.BOID = '0001' AND NBORelation3. ExternalBOID = DMMO.OID

Next, the centralized server notifies the DM1 that the Domain Managers queried for are DM2 and DM4. Further, the centralized server may notify the DM1 that the cell 0001 of the DM1 is neighboring to the cell 0009 of the DM2, and the cell 0010 of the DM4 is neighboring to the cell 0001 of the DM1. Upon receiving the notification, the DM1 may discover that the DM2 and DM4 are neighboring to the DM1, and further discover that its cell 0001 is neighboring to the cell 0009 of the DM2 and the cell 0010 of the DM4 respectively.

The above description discloses an entire process including that various Domain Managers send neighbor relationship determining information to a centralized server. It will be appreciated that once the neighbor relationship determining information has been stored in the centralized server, if desired, any Domain Manager can discover a neighboring Domain Manager through sending a query request to the centralized server directly, without sending the neighbor relationship determining information to the centralized server again.

Moreover, the centralized server has another function of updating when its stored BO information changes, and instructing relevant DMs to update. For example, as shown in Figure 2, after modifying configuration information of the cell 0001, the DM1 notifies a centralized server of the modified configuration information of the cell 0001, and the centralized server would update. Further, the centralized server would query the neighbor relationship determining information, find the DM2 and DM4 to which the cell 0009 and cell 0010 neighboring to the cell 0001 are subordinate to respectively, send the modified configuration information of the cell 0001 to the DM2 and DM4, and require the DM2 and DM4 to correspondingly update the configuration information of the cell 0009 and cell 0010 respectively, which may be implemented by extending database trigger and the like.

In the second embodiment of the present invention, all the operations which need to be conducted by the centralized server and are involved in two key steps of storing a neighbor relationship between BOs and an identifier of an object managed by a DM and querying the neighbor relationship, may be performed via Distributed Hash Table Overlay (DHT Overlay) which is constituted of various DMs in accordance with structured Peer-to-Peer network protocols, in other words, a virtual centralized server is achieved via the DHT Overlay constituted of partial computation capability of the DMs. The implementation of the DHT Overlay is disclosed in the prior art and will not be described in details herein.

Referring to Figure 4 which illustrates a structure of a Distributed Hash Table Overlay, all DMs are connected to each other as Peers, thus establishing the DHT Overlay. The DHT Overlay may be of any structured Peer-to-Peer network such as Chord or CAN, as long as a function interface with basic functions are offered, which basic functions include join/leave of a Peer, operation of put (key, content)/get (key) with respect to <Key, Content>, where the key is an identifier of a BO in the embodiment.

In the case where a neighbor relationship between BOs is symmetrical, a Domain Manager may send the neighbor relationship determining information with only an identifier of the Domain Manager, an identifier of an Internal BO of the Domain Manager, and an identifier of a corresponding External BO of the Domain Manager. For example, with respect to the DM1, DM1, BO 0001, ExternalBO 0009, and DM1, BO 0001, ExternalBO 0010, as well as DM1, BO 0002, ExternalBO 0006, are included, and the execution syntax is: put (ExternalBOID, DMID+BOID).

A Distributed Hash Table Overlay stores neighbor relationship determining information in a form as shown in Table 1. During a storage operation, an important feature of the DHT Overlay is utilized, which feature lies in that if Keys in storage operations invoked are identical in one DHT Overlay, these storage operations would be performed by the same Peer (DM, assumed to be Peer1), and therefore upon receiving a storage operation request, the Peer1 may determine whether a certain DM has set a content with the use of the same Key. If there is a DM which has set a content with the use of the same Key, the Peer1 may discover immediately that a neighbor relationship exists between these two DMs, and further be aware that an identifier of an Internal BO of one of the DMs is this Key, and an identifier of an External BO of the other DM is this Key. In other words, The Internal BO of the former DM and the External BO of the latter DM both refer to the same BO. Assume the identifiers of these two DMs to be DM1 and DM2 respectively, the Peer1 stores these neighbor relationships in the DHT Overlay, the corresponding operation syntaxes are: put (DM1, DM2 + BOID + ExternalBOID) and put (DM2, DM1 + BOID + ExternalBOID).

Table 1 is referred for the description below. For example, if the DM1 invokes an operation syntax: put ('0009', 'DM1' + '0001'), and the Peer1 is the processing peer corresponding to KEY 0009, the information would be stored on the Peer1. If the DM2 invokes an operation syntax: put ('0001', 'DM2' + '0009'), the information would also reach the Peer1 due to the function of the DHT Overlay. Here, the Peer1 may determine that a neighbor relationship exists between the DM1 and DM2, and those two neighboring BOs are BO 0009 (managed by the DM2) and BO 0001 (managed by the DM1), then the Peer1 invokes an operation syntax: put ('DM1', 'DM2' + '0001' + '0009') to store those neighbor relationships within the DHT Overlay.

During a query operation, a Domain Manager invokes an operation with the use of its own identifier, the execution syntax is: get (DMID). Once receiving a query request, according to the stored neighbor relationships, a Distributed Hash Table Overlay may find a Domain Manager neighboring to this Domain Manager, and the BOs by which the neighbor relationship is formed. Referring to Table 1, for example, if the DM 1 perform a syntax of get ('DMID'), the Distributed Hash Table Overlay may discover that the DM2 and DM4 are neighboring to DM1 according to the stored neighbor relationship, and further discover that the BO 0009 is neighboring to the BO 0001, and the BO 0010 is neighboring to the BO 0001. Next, the Distributed Hash Table Overlay notifies the DM1 that the DM2 and DM4 are neighboring to the DM1, and both the BO 0009 and the BO 0010 are neighboring to the BO 0001.

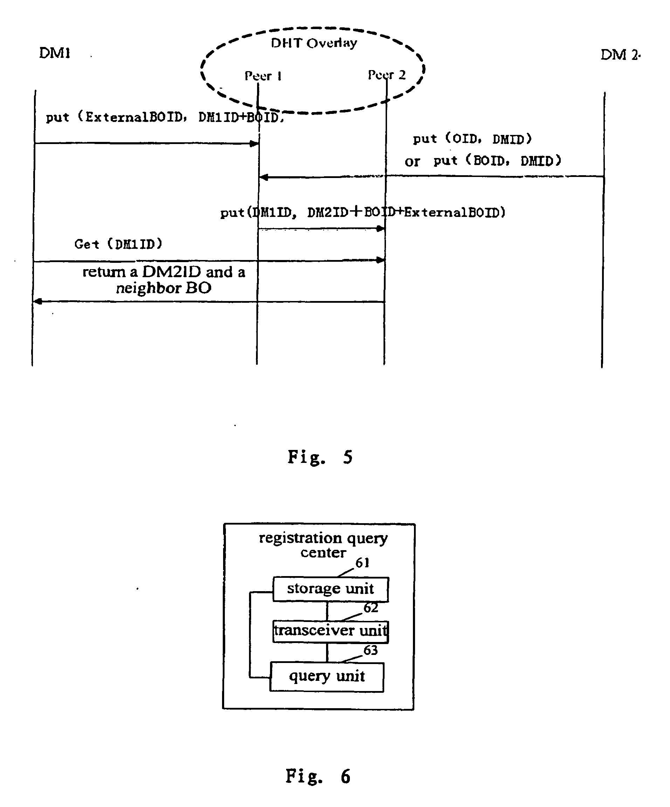

Referring to Figure 5, in the case where a neighbor relationship between BOs is unsymmetrical, for example in a GSM network, when a cell is to be switched, if the DM to be switched can be aware that which of its managed Objects is BO, the neighbor relationship determining information sent by one DM should includes two parts of information respectively about switching to another DM and about acting as a target to which another DM switches. For example, DM1, BO 0001, ExternalBO 0009, and DM1, BO 0001, ExternalBO 0010, as well as DM1, BO 0001 are included with respect to DM1. The Distributed Hash Table Overlay stores neighbor relationship determining information in a form as shown in Table 2, and various DMs send the neighbor relationship determining information with execution syntaxes of put (ExternalBOID, DMID+BOID) and put (BOID, DMID). For example, the execution syntaxes for the DM1 is put ('0009', 'DM1' + '0001') and put ('0001', 'DMID'); while the execution syntaxes for the DM2 is put ('0008', 'DMID' + '0007') and put ('0009', 'DM2').

If the DM to be switched is not aware that which of its managed Objects is BO, the neighbor relationship determining information sent by one DM should includes two parts of information respectively about switching to another DM and about acting as a target to which another DM switches , and the Distributed Hash Table Overlay stores neighbor relationship determining information in a form as shown in Table 3 or 4. Various DMs send the neighbor relationship determining information with execution syntaxes of put (ExternalBOID, DMID+BOID) and put (OID, DMID). For example, the execution syntaxes for the DM1 is put ('0009', 'DM1' + '0001') and put ('0001', 'DM1'); while the execution syntaxes for the DM2 is put ('0008', 'DM2' + '0007') and put ('0009', 'DM2').

The Peer1 denotes a charge peer for two same Keys (BOIDs) in the DHT Overlay, and is actually a Domain Manager, while the Peer2 denotes a charge peer for another two same Keys, and is actually another Domain Manager. Particularly, in terms of a system including relatively many Domain Managers, each of which may be in charge of a part of peers respectively, thus all of the Domain Managers constitute equivalently a virtual centralized server.

Likewise, in one DHT Overlay, during an operation of storing neighbor relationship determining information, if Keys in storage operations invoked are identical, these storage operations would be performed by the same Peer such as the Peer1 in the Figure, and therefore upon receiving a storage operation request, the Peer1 may determine whether a certain DM has set a content with the use of the same Key. If there is a DM which has set a content with the use of the same Key, the Peer1 may discover immediately that a neighbor relationship exists between these two DMs, and further be aware that identifiers of BOs of these DMs are this Key. Assume the identifiers of these two DMs to be DM1 and DM2 respectively, the Peer1 stores the neighbor relationships in the DHT Overlay, the corresponding operation syntax is put (DM1, DM2 + BOID + ExtemalBOID).

The DM1 performs get (DM1) when it sends a query request to the DHT Overlay. Upon receiving the query request, the DHT Overlay finds that the DM2 and DM4 are Neighbor Domain Managers of the DM1, and that the cell 0001 of the DM1 is neighboring to the cell 0009 of the DM2, and the cell 0010 of the DM4 is neighboring to the cell 0001 of the DM1. After receiving this notification, the DM1 may discover that the DM2 and DM4 are neighboring to the DM1, and its cell 0001 are neighboring to the cell 0009 of the DM2 and the cell 0010 of the DM4.

It can seen from the above embodiments that the essentiality of either a centralized server or a Distributed Hash Table Overlay equivalent to a virtual centralized server lies in constructing a registration query center, storing neighbor relationship determining information of multiple Domain Managers via the registration query center, querying for a Neighbor Domain Manager from the neighbor relationship determining information according to a query request from a certain Domain Manager, and notifying the Domain Manager initiating the query request of a query result. It will be appreciated to the ordinary skilled in the art that the registration query center may be either within a Domain Manager system, or independent of the Domain Manager system and provides query service for a Domain Manger.

In view of the above, the present invention further discloses a registration query center. Referring to Figure 6 illustrating a structural schematic diagram of a registration query center of an embodiment of the present invention, in particular, the registration query center of the embodiment includes a storage unit 61, a query unit 63 and a transceiver unit 62. An internal structure of the registration query center will be further described in details in connection with its operational principle. The registration query center is either a centralized server or a Distributed Hash Table Overlay, all the Domain Managers in the Distributed Hash Table Overlay are connected with each other as Peers.

With the use of the transceiver unit 62, the registration query center receives neighbor relationship determining information from the multiple Domain Managers and a query request of a first Domain Manager, and sends a query result to the first Domain Manager. Accordingly, the Domain Manager should have functions of reporting the neighbor relationship determining information to the registration query center and receiving the query result returned by the registration query center. For example, the Domain Manager may includes a registration unit for sending the neighbor relationship determining information to the registration query center, and a neighbor information discovery unit for sending a query request to the registration query center and discovering a Neighbor Domain Manager from a query result returned by the registration query center.

After receiving the neighbor relationship determining information from the multiple Domain Managers, the transceiver unit 62 stores the neighbor relationship determining information via the storage unit for subsequent usage of query. In particular, upon receiving a request of querying for a Neighbor Domain Manager, the transceiver 62 would notify the query unit 63. Then, the query unit 63 queries for a Neighbor Domain Manager from the neighbor relationship determining information provided by the storage unit 61, and notifies the transceiver unit 62 of a query result. Finally, the transceiver unit 62 sends the query result to the Domain Manager initiating the query request.

In summary, with the use of technical solutions of the present invention, a neighbor relationship is stored and queried centralizedly via a real centralized server or a virtual centralized server formed by various DMs in the form of a Distributed Hash Table Overlay, thereby reducing effectively the difficulty and communication load in discovering a Neighbor Domain Manager by a Domain Manager, improving considerably the capability of cooperating and managing between Domain Managers through Point-to-Point approach, and decreasing resources consumption.

Further, a Domain Manager may discover not only its Neighbor Domain Manager, but also more particular neighbor information such as which BO of the Neighbor Domain Manager is neighboring to a BO managed by the Domain Manager.

The above disclosure is merely preferred embodiments of the present invention. It will be appreciated to the ordinary skilled in the art that many improvements and modifications are possible, all such improvements and modifications are intended to be within the scope of the present invention.

## Claims

1. A Domain Manager system comprising a plurality of Domain Managers, the plurality of Domain Managers including a first Domain Managers, **characterized in that** the system further comprises:
a registration query center adapted to store neighbor relationship determining information of the plurality of Domain Managers, to receive a query request from the first Domain Manager, to query for a Neighbor Domain Manager from the neighbor relationship determining information based upon the query request, and to send a query result to the first Domain Manager,
wherein the first Domain Manager is adapted to discover a Domain Manager neighboring to the first Domain Manager from the received query result.

2. The Domain Manager system according to claim 1, wherein the registration query center comprises a storage unit (61), a query unit (63) and a transceiver unit (62), wherein
the transceiver unit(62) is adapted to receive the neighbor relationship determining information from the plurality of Domain Managers and the query request from the Domain Manager, and to send the query result to the Domain Manager;
the storage unit(61) is adapted to store the neighbor relationship determining information of the plurality of Domain Managers received by the transceiver unit(62);
the query unit(63) is adapted to query for, according to the query request received by the transceiver unit(62), a Neighbor Domain Manager from the neighbor relationship determining information provided by the storage unit, and to notify the transceiver unit(62) of the query result.

3. The Domain Manager system according to claim 1, wherein the Domain Manager comprises:
a registration unit, adapted to send the neighbor relationship determining information to the registration query center; and
a neighbor information discovery unit, adapted to send the query request to the registration query center and discover a Neighbor Domain Manager from the query result sent by the registration query center.

4. The Domain Manager system according to any one of claims 1 to 3, wherein the neighbor relationship determining information comprises a match relationship among the Domain Manager, an Internal Border Object and an External Border Object corresponding to the Internal Border Object.

5. The Domain Manager system according to any one of claims 1 to 3, wherein the registration query center is a centralized server or a Distributed Hash Table Overlay.

6. A method for discovering a Neighbor Domain Manager, comprising:
receiving from a first Domain Manager a query request for querying for a Domain Manager neighboring to the first Domain Manager; and
querying a stored neighbor relationship determining information of Domain Managers based upon the query request, finding out a Domain Manager neighboring to the first Domain Manager and sending a query result to the first Domain Manager.

7. The method according to claim 6, wherein:
the neighbor relationship determining information comprises a match relationship among the Domain Manager, an Internal Border Object and an External Border Object corresponding to the Internal Border Object.

8. The method according to claim 7, wherein the query request comprises the first Domain Manager, the process of querying the neighbor relationship determining information comprises:
finding out an External Border Object corresponding to the first Domain Manager, according to the match relationship among the Domain Manager, the Internal Border Object and the External Border Object; and
finding out a Domain Manager to which the External Border Object corresponding to the first Domain Manager is subordinate, according to the match relationship among the Domain Manager, the Internal Border Object and the External Border Object.

9. The method according to claim 7, wherein the query request comprises the first Domain Manager and the Internal Border Object within the first Domain Manager, the process of querying the neighbor relationship determining information comprises:
finding out an External Border Object neighboring to the Internal Border Object of the first Domain Manager, according to the match relationship among the Domain Manager, the Internal Border Object and the External Border Object; and
finding out a Domain Manager to which the External Border Object neighboring to the Internal Domain Manager of the first Domain Manager is subordinate, according to the match relationship among the Domain Manager, the Internal Border Object and the External Border Object.

10. The method according to claim 7, wherein the neighbor relationship determining information further comprises a match relationship between a Domain Manager and a Managed Element managed by the Domain Manager.

11. The method according to claim 10, wherein the query request comprises the first Domain Manager, the process of querying the neighbor relationship determining information comprises:
finding out an External Border Object corresponding to the first Domain Manager, according to the match relationship among the Domain Manager, the Internal Border Object and the External Border Object; and
finding out a Domain Manager to which the External Border Object corresponding to the first Domain Manager is subordinate, according to the match relationship between the Domain Manager and the Managed Element managed by the Domain Manager.

12. The method according to claim 10, wherein the query request comprises the first Domain Manager and the Internal Border Object within the first Domain Manager, the process of querying the neighbor relationship determining information comprises: and
finding out an External Border Object neighboring to the Internal Border Object of the first Domain Manager, according to the match relationship among the Domain Manager, the Internal Border Object and the External Border Object;
finding a Domain Manager to which the External Border Object neighboring to the Internal Domain Manager of the first Domain Manager is subordinate, according to the match relationship between the Domain Manager and the Managed Element managed by the Domain Manager.

13. The method according to any one of claims 6 to 12, wherein the query result further comprises particular information of the External Border Object corresponding to the first Domain Manager.

14. The method according to any one of claims 6 to 12 wherein the storing the neighbor relationship determining information is implemented by storing the neighbor relationship determining information via the centralized server or the Distributed Hash Table Overlay.

15. The method for discovering a Neighbor Domain Manager according to any one of claims 6 to 12, further comprising:
receiving configuration information of an modified Internal Border Object of a first Domain Manager;
querying neighbor relationship determining information of various Domain Managers, finding out a Domain Manager to which an External Border Object neighboring to the modified Internal Border Object of the first Domain Manager is subordinate; and
forwarding the received configuration information of the modified Internal Border Object of the first Domain Manager to the found Domain Manager, and instructing the found Domain Manager to update.

16. The method according to claim 15, wherein if the modified configuration information involves a change of the neighbor relationship determining information, the method further comprises:
updating the neighbor relationship determining information.

17. The method according to claim 15, wherein the neighbor relationship determining information comprises a match relationship among the Domain Manager, an Internal Border Object and an External Border Object neighboring to the Internal Border Object;
or
the neighbor relationship determining information comprises a match relationship among the Domain Manager, an Internal Border Object and an External Border Object neighboring to the Internal Border Object, and a match relationship between the Domain Manager and a Managed Element managed by the Domain Manager.

18. A registration query center, comprising a storage unit(61), a query unit(63) and a transceiver unit(62), wherein:
the transceiver unit(62) is adapted to receive the neighbor relationship determining information from the plurality of Domain Managers of a Domain Manager system, and a query request, and to send a query result to the corresponding Domain Manager;
the storage unit(61) is adapted to store the neighbor relationship determining information of the plurality of Domain Managers received by the transceiver unit(62);
the query unit(63) is adapted to query for, according to the query request received by the transceiver unit(62), a Neighbor Domain Manager from the neighbor relationship determining information provided by the storage unit, and to notify the transceiver unit(62) of the query result.

19. The registration query center according to claim 18, wherein the neighbor relationship determining information comprises a match relationship among the Domain Manager, an Internal Border Object and an External Border Object neighboring to the Internal Border Object.

20. The registration query center according to claim 19, wherein the neighbor relationship determining information further comprises a match relationship between the Domain Manager and a Managed Element managed by the Domain Manager.

21. The registration query center according to any one of claims 17 to 20, wherein the registration query center is a centralized server or a Distributed Hash Table Overlay.

## Patentansprüche

1. Domain-Manager-System, das mehrere Domain Manager umfasst, wobei die mehreren Domain Manager einen ersten Domain Manager umfassen, **dadurch gekennzeichnet, dass** das System ferner Folgendes umfasst:
eine Registrationsanfragestelle, die dafür ausgelegt ist, Nachbarbeziehungs-Bestimmungsinformationen der mehreren Domain Manager zu speichern, eine Anfrageanforderung von dem ersten Domain Manager zu empfangen, aus den Nachbarbeziehungs-Bestimmungsinformationen auf der Basis der Anfrageanforderung nach einem benachbarten Domain Manager anzufragen und ein Anfrageergebnis zu dem ersten Domain Manager zu senden,
wobei der erste Domain Manager dafür ausgelegt ist, aus dem empfangenen Anfrageergebnis einen dem ersten Domain Manager benachbarten Domain Manager zu entdecken.

2. Domain-Manager-System nach Anspruch 1, wobei die Registrationsanfragestelle eine Speicherungseinheit (61), eine Anfrageeinheit (63) und eine Sender-/Empfängereinheit (62) umfasst, wobei
die Sender-/Empfängereinheit (62) dafür ausgelegt ist, die Nachbarbeziehungs-Bestimmungsinformationen der mehreren Domain Manager und die Anfrageanforderung von dem Domain Manager zu empfangen und das Anfrageergebnis zu dem Domain Manager zu senden;
die Speicherungseinheit (61) dafür ausgelegt ist, die durch die Sender-/Empfängereinheit (62) empfangenen Nachbarbeziehungs-Bestimmungsinformationen der mehreren Domain Manager zu speichern;
die Anfrageeinheit (63) dafür ausgelegt ist, gemäß der durch die Sender-/Empfängereinheit (62) empfangenen Anfrageanforderung aus den durch die Speicherungseinheit bereitgestellten Nachbarbeziehungs-Bestimmungsinformationen nach einem benachbarten Domain Manager anzufragen und die Sender-/Empfängereinheit (62) über das Anfrageergebnis zu benachrichtigen.

3. Domain-Manager-System nach Anspruch 1, wobei der Domain Manager Folgendes umfasst:
eine Registrationseinheit, die dafür ausgelegt ist, die Nachbarbeziehungs-Bestimmungsinformationen zu der Registrationsanfragestelle zu senden; und
eine Nachbarinformations-Entdeckungseinheit, die dafür ausgelegt ist, die Anfrageanforderung zu der Registrationsanfragestelle zu senden und aus dem durch die Registrationsanfragestelle gesendeten Anfrageergebnis einen benachbarten Domain Manager zu entdecken.

4. Domain-Manager-System nach einem der Ansprüche 1 bis 3, wobei die Nachbarbeziehungs-Bestimmungsinformationen eine Übereinstimmungsbeziehung zwischen dem Domain Manager, einem internen Border Object und einem dem internen Border Object entsprechenden externen Border Object umfassen.

5. Domain-Manager-System nach einem der Ansprüche 1 bis 3, wobei die Registrationsanfragestelle ein zentralisierter Server oder ein Distributed Hash Table Overlay ist.

6. Verfahren zum Entdecken eines benachbarten Domain Managers mit den folgenden Schritten:
Empfangen einer Anfrageanforderung von einem ersten Domain Manager zum Anfragen nach einem dem ersten Domain Manager benachbarten Domain Manager;
und
Anfragen bei gespeicherten Nachbarbeziehungs-Bestimmungsinformationen von Domain Managern auf der Basis der Anfrageanforderung, Herausfinden eines dem ersten Domain Manager benachbarten Domain Managers und Senden eines Anfrageergebnisses zu dem ersten Domain Manager.

7. Verfahren nach Anspruch 6, wobei
die Nachbarbeziehungs-Bestimmungsinformationen eine Übereinstimmungsbeziehung zwischen dem Domain Manager, einem internen Border Object und einem dem internen Border Object entsprechenden externen Border Object umfassen.

8. Verfahren nach Anspruch 7, wobei die Anfrageanforderung den ersten Domain Manager umfasst und der Prozess des Anfragens bei den Nachbarbeziehungs-Bestimmungsinformationen Folgendes umfasst:
Herausfinden eines dem ersten Domain Manager entsprechenden externen Border Object gemäß der Übereinstimmungsbeziehung zwischen dem Domain Manager, dem internen Border Object und dem externen Border Object; und
Herausfinden eines Domain Managers, dem das dem ersten Domain Manager entsprechende externe Border Object untergeordnet ist, gemäß der Übereinstimmungsbeziehung zwischen dem Domain Manager, dem internen Border Object und dem externen Border Object.

9. Verfahren nach Anspruch 7, wobei die Anfrageanforderung den ersten Domain Manager und das interne Border Object in dem ersten Domain Manager umfasst und der Prozess des Anfragens bei den Nachbarbeziehungs-Bestimmungsinformationen Folgendes umfasst:
Herausfinden eines dem internen Border Object des ersten Domain Managers benachbarten externen Border Object gemäß der Übereinstimmungsbeziehung zwischen dem Domain Manager, dem internen Border Object und dem externen Border Object; und
Herausfinden eines Domain Managers, dem das dem internen Domain Manager des ersten Domain Managers benachbarte externe Border Object untergeordnet ist, gemäß der Übereinstimmungsbeziehung zwischen dem Domain Manager, dem internen Border Object und dem externen Border Object.

10. Verfahren nach Anspruch 7, wobei die Nachbarbeziehungs-Bestimmungsinformationen ferner eine Übereinstimmungsbeziehung zwischen einem Domain Manager und einem durch den Domain Manager verwalteten Managed Element umfassen.

11. Verfahren nach Anspruch 10, wobei die Anfrageanforderung den ersten Domain Manager umfasst und der Prozess des Anfragens bei den Nachbarbeziehungs-Bestimmungsinformationen Folgendes umfasst:
Herausfinden eines dem ersten Domain Manager entsprechenden externen Border Object gemäß der Übereinstimmungsbeziehung zwischen dem Domain Manager, dem internen Border Object und dem externen Border Object; und
Herausfinden eines Domain Managers, dem das dem ersten Domain Manager entsprechende externe Border Object untergeordnet ist, gemäß der Übereinstimmungsbeziehung zwischen dem Domain Manager und dem durch den Domain Manager verwalteten Managed Element.

12. Verfahren nach Anspruch 10, wobei die Anfrageanforderung den ersten Domain Manager und das interne Border Object in dem ersten Domain Manager umfasst und der Prozess des Anfragens bei den Nachbarbeziehungs-Bestimmungsinformationen Folgendes umfasst:
Herausfinden eines dem internen Border Object des ersten Domain Managers benachbarten externen Border Object gemäß der Übereinstimmungsbeziehung zwischen dem Domain Manager, dem internen Border Object und dem externen Border Object;
Finden eines Domain Managers, dem das dem internen Domain Manager des ersten Domain Managers benachbarte externe Border Object untergeordnet ist, gemäß der Übereinstimmungsbeziehung zwischen dem Domain Manager und dem durch den Domain Manager verwalteten Managed Element.

13. Verfahren nach einem der Ansprüche 6 bis 12, wobei das Anfrageergebnis ferner bestimmte Informationen des dem ersten Domain Manager entsprechenden externen Border Object umfasst.

14. Verfahren nach einem der Ansprüche 6 bis 12, wobei das Speichern der Nachbarbeziehungs-Bestimmungsinformationen durch Speichern der Nachbarbeziehungs-Bestimmungsinformationen über den zentralisierten Server oder das Distributed Hash Table Overlay implementiert wird.

15. Verfahren zum Entdecken eines benachbarten Domain Managers nach einem der Ansprüche 6 bis 12, ferner mit den folgenden Schritten:
Empfangen von Konfigurationsinformationen eines modifizierten internen Border Object eines ersten Domain Managers;
Anfragen bei Nachbarbeziehungs-Bestimmungsinformationen verschiedener Domain Manager, Herausfinden eines Domain Managers, dem ein dem modifizierten internen Border Object des ersten Domain Managers benachbartes externes Border Object untergeordnet ist; und
Weiterleiten der empfangenen Konfigurationsinformationen des modifizierten internen Border Object des ersten Domain Managers zu dem gefundenen Domain Manager und Anweisen des gefundenen Domain Managers, zu aktualisieren.

16. Verfahren nach Anspruch 15, wobei, wenn die modifizierten Konfigurationsinformationen eine Änderung der Nachbarbeziehungs-Bestimmungsinformationen involvieren, das Verfahren ferner Folgendes umfasst:
Aktualisieren der Nachbarbeziehungs-Bestimmungsinformationen.

17. Verfahren nach Anspruch 15, wobei die Nachbarbeziehungs-Bestimmungsinformationen eine Übereinstimmungsbeziehung zwischen dem Domain Manager, einem internen Border Object und einem dem internen Border Object benachbarten externen Border Object umfassen; oder
die Nachbarbeziehungs-Bestimmungsinformationen eine Übereinstimmungsbeziehung zwischen dem Domain Manager, einem internen Border Object und einem dem internen Border Object benachbarten externen Border Object und eine Übereinstimmungsbeziehung zwischen dem Domain Manager und einem durch den Domain Manager verwalteten Managed Element umfassen.

18. Registrationsanfragestelle mit einer Speicherungseinheit (61), einer Anfrageeinheit (63) und einer Sender-/Empfängereinheit (62), wobei
die Sender-/Empfängereinheit (62) dafür ausgelegt ist, die Nachbarbeziehungs-Bestimmungsinformationen von den mehreren Domain Managern eines Domain-Manager-Systems und eine Anfrageanforderung zu empfangen und ein Anfrageergebnis zu dem entsprechenden Domain Manager zu senden;
die Speicherungseinheit (61) dafür ausgelegt ist, die durch die Sender-/Empfängereinheit (62) empfangenen Nachbarbeziehungs-Bestimmungsinformationen der mehreren Domain Manager zu speichern;
die Anfrageeinheit (63) dafür ausgelegt ist, gemäß der durch die Sender-/Empfängereinheit (62) empfangenen Anfrageanforderung aus den durch die Speicherungseinheit bereitgestellten Nachbarbeziehungs-Bestimmungsinformationen nach einem benachbarten Domain Manager anzufragen und die Sender-/Empfängereinheit (62) über das Anfrageergebnis zu benachrichtigen.

19. Registrationsanfragestelle nach Anspruch 18, wobei die Nachbarbeziehungs-Bestimmungsinformationen eine Übereinstimmungsbeziehung zwischen dem Domain Manager, einem internen Border Object und einem dem internen Border Object benachbarten externen Border Object umfassen.

20. Registrationsanfragestelle nach Anspruch 19, wobei die Nachbarbeziehungs-Bestimmungsinformationen ferner eine Übereinstimmungsbeziehung zwischen dem Domain Manager und einem durch den Domain Manager verwalteten Managed Element umfassen.

21. Registrationsanfragestelle nach einem der Ansprüche 17 bis 20, wobei die Registrationsanfragestelle ein zentralisierter Server oder ein Distributed Hash Table Overlay ist.

## Revendications

1. Système Gestionnaire de Domaines comprenant une pluralité de Gestionnaires de Domaines, la pluralité de Gestionnaires de Domaines comportant un premier Gestionnaire de Domaines, **caractérisé en ce que** le système comprend en outre :
un centre d'interrogation d'enregistrement adapté pour mémoriser des informations de détermination de relations de voisins de la pluralité de Gestionnaires de Domaines,
recevoir une requête d'interrogation du premier Gestionnaire de Domaines, interroger un Gestionnaire de Domaines Voisin à partir des informations de détermination de relations de voisins en fonction de la requête d'interrogation, et envoyer un résultat d'interrogation au premier Gestionnaire de Domaines,
dans lequel le premier Gestionnaire de Domaines est adapté pour découvrir un Gestionnaire de Domaines voisin du premier Gestionnaire de Domaines à partir du résultat d'interrogation reçu.

2. Système Gestionnaire de Domaines selon la revendication 1, dans lequel le centre d'interrogation d'enregistrement comprend une unité de mémorisation (61), une unité d'interrogation (63) et une unité d'émetteur-récepteur (62), dans lequel l'unité d'émetteur-récepteur (62) est adaptée pour recevoir les informations de détermination de relations de voisins à partir de la pluralité de Gestionnaires de Domaines et la requête d'interrogation du Gestionnaire de Domaines, et envoyer le résultat d'interrogation au Gestionnaire de Domaines ;
l'unité de mémorisation (61) est adaptée pour mémoriser les informations de détermination de relations de voisins de la pluralité de Gestionnaires de Domaines reçues par l'unité d'émetteur-récepteur (62) ;
l'unité d'interrogation (63) est adaptée pour interroger, en fonction de la requête d'interrogation reçue par l'unité d'émetteur-récepteur (62), un Gestionnaire de Domaines Voisin à partir des informations de détermination de relations de voisins fournies par l'unité de mémorisation, et notifier l'unité d'émetteur-récepteur (62) du résultat d'interrogation.

3. Système Gestionnaire de Domaines selon la revendication 1, dans lequel le Gestionnaire de Domaines comprend :
une unité d'enregistrement, adaptée pour envoyer les informations de détermination de relations de voisins au centre d'interrogation d'enregistrement ; et
une unité de découverte d'informations de voisins, adaptée pour envoyer la requête d'interrogation au centre d'interrogation d'enregistrement et découvrir un Gestionnaire de Domaines Voisin à partir du résultat d'interrogation envoyé par le centre d'interrogation d'enregistrement.

4. Système Gestionnaire de Domaines selon l'une quelconque des revendications 1 à 3, dans lequel les informations de détermination de relations de voisins comprennent une relation de correspondance entre le Gestionnaire de Domaines, un Objet Limitrophe Interne et un Objet Limitrophe Externe correspondant à l'Objet Limitrophe Interne.

5. Système Gestionnaire de Domaines selon l'une quelconque des revendications 1 à 3, dans lequel le centre d'interrogation d'enregistrement est un serveur centralisé ou un Recouvrement de Table de Hachage Distribuée.

6. Procédé de découverte d'un Gestionnaire de Domaines Voisin, comprenant :
la réception depuis un premier Gestionnaire de Domaines d'une requête d'interrogation pour interroger un Gestionnaire de Domaines voisin du premier Gestionnaire de Domaines ; et
l'interrogation d'informations de détermination de relations de voisins mémorisées des Gestionnaires de Domaines en fonction de la requête d'interrogation, l'obtention d'un Gestionnaire de Domaines voisin du premier Gestionnaire de Domaines et l'envoi d'un résultat d'interrogation au premier Gestionnaire de Domaines.

7. Procédé selon la revendication 6, dans lequel
les informations de détermination de relations de voisins comprennent une relation de correspondance entre le Gestionnaire de Domaines, un Objet Limitrophe Interne et un Objet Limitrophe Externe correspondant à l'Objet Limitrophe Interne.

8. Procédé selon la revendication 7, dans lequel la requête d'interrogation comprend le premier Gestionnaire de Domaine, le processus d'interrogation des informations de détermination de relations de voisins comprend :
l'obtention d'un Objet Limitrophe Externe correspondant au premier Gestionnaire de Domaines, en fonction de la relation de correspondance entre le Gestionnaire de Domaines, l'Objet Limitrophe Interne et l'Objet Limitrophe Externe ; et
l'obtention d'un Gestionnaire de Domaines auquel est subordonné l'Objet Limitrophe Externe correspondant au premier Gestionnaire de Domaines, en fonction de la relation de correspondance entre le Gestionnaire de Domaines, l'Objet Limitrophe Interne et l'Objet Limitrophe Externe.

9. Procédé selon la revendication 7, dans lequel la requête d'interrogation comprend le premier Gestionnaire de Domaines et l'Objet Limitrophe Interne dans le premier Gestionnaire de Domaines, le processus d'interrogation des informations de détermination de relations de voisins comprend :
l'obtention d'un Objet Limitrophe Externe voisin de l'Objet Limitrophe Interne du premier Gestionnaire de Domaines, en fonction de la relation de correspondance entre le Gestionnaire de Domaines, l'Objet Limitrophe Interne et l'Objet Limitrophe Externe ; et
l'obtention d'un Gestionnaire de Domaines auquel est subordonné l'Objet Limitrophe Externe voisin du Gestionnaire de Domaines Interne du premier Gestionnaire de Domaines, en fonction de la relation de correspondance entre le Gestionnaire de Domaines, l'Objet Limitrophe Interne et l'Objet Limitrophe Externe.

10. Procédé selon la revendication 7, dans lequel les informations de détermination de relations de voisins comprennent en outre une relation de correspondance entre un Gestionnaire de Domaines et un Elément Géré géré par le Gestionnaire de Domaines.

11. Procédé selon la revendication 10, dans lequel la requête d'interrogation comprend le premier Gestionnaire de Domaines, le processus d'interrogation des informations de détermination de relations de voisins comprend :
l'obtention d'un Objet Limitrophe Externe correspondant au premier Gestionnaire de Domaines, en fonction de la relation de correspondance entre le Gestionnaire de Domaines, l'Objet Limitrophe Interne et l'Objet Limitrophe Externe ; et
l'obtention d'un Gestionnaire de Domaines auquel est subordonné l'Objet Limitrophe Externe correspondant au premier Gestionnaire de Domaines, en fonction de la relation de correspondance entre le Gestionnaire de Domaines et l'Elément Géré géré par le Gestionnaire de Domaines.

12. Procédé selon la revendication 10, dans lequel la requête d'interrogation comprend le premier Gestionnaire de Domaines et l'Objet Limitrophe Interne dans le premier Gestionnaire de Domaines, le processus d'interrogation des informations de détermination de relations de voisins comprend :
l'obtention d'un Objet Limitrophe Externe voisin de l'Objet Limitrophe Interne du premier Gestionnaire de Domaines, en fonction de la relation de correspondance entre le Gestionnaire de Domaines, l'Objet Limitrophe Interne et l'Objet Limitrophe Externe ; et
l'obtention d'un Gestionnaire de Domaines auquel est subordonné l'Objet Limitrophe Externe voisin du Gestionnaire de Domaines Interne du premier Gestionnaire de Domaines, en fonction de la relation de correspondance entre le Gestionnaire de Domaines et l'Elément Géré géré par le Gestionnaire de Domaines.

13. Procédé selon l'une quelconque des revendications 6 à 12, dans lequel le résultat d'interrogation comprend en outre des informations particulières de l'Objet Limitrophe Externe correspondant au premier Gestionnaire de Domaines.

14. Procédé selon l'une quelconque des revendications 6 à 12, dans lequel la mémorisation des informations de détermination de relations de voisins est mise en oeuvre en mémorisant les informations de détermination de relations de voisins par l'intermédiaire du serveur centralisé ou du Recouvrement de Table de Hachage Distribuée.

15. Procédé de découverte d'un Gestionnaire de Domaines Voisin selon l'une quelconque des revendications 6 à 12, comprenant en outre :
la réception d'informations de configuration d'un Objet Limitrophe Interne modifié d'un premier Gestionnaire de Domaines ;
l'interrogation d'informations de détermination de relations de voisins de divers Gestionnaires de Domaines, l'obtention d'un Gestionnaire de Domaines auquel est subordonné un Objet Limitrophe Externe voisin de l'Objet Limitrophe Interne modifié du premier Gestionnaire de Domaines ; et
le réacheminement des informations de configuration reçues de l'Objet Limitrophe Interne modifié du premier Gestionnaire de Domaines au Gestionnaire de Domaine obtenu, et l'ordre au Gestionnaire de Domaines obtenu de procéder à une actualisation.

16. Procédé selon la revendication 15, dans lequel si les informations de configuration modifiées impliquent un changement des informations de détermination de relations de voisins, le procédé comprend en outre :
l'actualisation des informations de détermination de relations de voisins.

17. Procédé selon la revendication 15, dans lequel les informations de détermination de relations de voisins comprennent une relation de correspondance entre le Gestionnaire de Domaines, un Objet Limitrophe Interne et un Objet Limitrophe Externe voisin de l'Objet Limitrophe Interne ;
ou
les informations de détermination de relations de voisins comprennent une relation de correspondance entre le Gestionnaire de Domaines, un Objet Limitrophe Interne et un Objet Limitrophe Externe voisin de l'Objet Limitrophe Interne, et une relation de correspondance entre le Gestionnaire de Domaines et un Elément Géré géré par le Gestionnaire de Domaines.

18. Centre d'interrogation d'enregistrement comprenant une unité de mémorisation (61), une unité d'interrogation (63) et une unité d'émetteur-récepteur (62), dans lequel
l'unité d'émetteur-récepteur (62) est adaptée pour recevoir les informations de détermination de relations de voisins à partir de la pluralité de Gestionnaires de Domaines d'un système Gestionnaire de Domaines, et une requête d'interrogation, et envoyer un résultat d'interrogation au Gestionnaire de Domaines correspondant ;
l'unité de mémorisation (61) est adaptée pour mémoriser les informations de détermination de relations de voisins de la pluralité de Gestionnaires de Domaines reçues par l'unité d'émetteur-récepteur 62) ;
l'unité d'interrogation (63) est adaptée pour interroger, en fonction de la requête d'interrogation reçue par l'unité d'émetteur-récepteur (62), un Gestionnaire de Domaines Voisin à partir des informations de détermination de relations de voisins fournies par l'unité de mémorisation, et notifier l'unité d'émetteur-récepteur (62) du résultat d'interrogation.

19. Centre d'interrogation d'enregistrement selon la revendication 18, dans lequel les informations de détermination de relations de voisins comprennent une relation de correspondance entre le Gestionnaire de Domaines, un Objet Limitrophe Interne et un Objet Limitrophe Externe voisin de l'Objet Limitrophe Interne.

20. Centre d'interrogation d'enregistrement selon la revendication 19, dans lequel les informations de détermination de relations de voisins comprennent en outre une relation de correspondance entre le Gestionnaire de Domaines et un Elément Géré géré par le Gestionnaire de Domaines.

21. Centre d'interrogation d'enregistrement selon l'une quelconque des revendications 17 à 20, le centre d'interrogation d'enregistrement étant un serveur centralisé ou un Recouvrement de Table de Hachage Distribuée.
